# EUROPEAN PATENT APPLICATION

(11) **EP 4 372 111 A1**
(43) Date of publication of application: **22.05.2024**
(21) Application number: 22842191.3
(22) Date of filing: 14.07.2022
(51) Int. Cl.: C22B 3/18, C22B 11/00, C22B 59/00

(54) **METAL RECOVERING METHOD**

(30) Priority: 14.07.2021 JP 2021116555
(71) Applicant: Toyo Engineering Corporation, Tokyo 105-0003 (JP); University Public Corporation Osaka, Osaka-shi, Osaka 545-0051 (JP)
(72) Inventor: ISHISAKA Takuya, Narashino-shi, Chiba 275-0024 (JP); TANAKA Hiroshi, Narashino-shi, Chiba 275-0024 (JP); MINAMI Takaya, Narashino-shi, Chiba 275-0024 (JP); KONISHI Yasuhiro, Sakai-shi, Osaka 599-8531 (JP); SAITOU Norizou, Sakai-shi, Osaka 599-8531 (JP)
(74) Representative: Bianchetti & Minoja with Trevisan & Cuonzo IPS SRL
(86) International application number: PCT/JP2022/027778
(87) International publication number: WO 2023/286850

(57) **Abstract**

To provide a metal recovery method that has a low environmental impact and that can achieve metal recovery at low cost and with high efficiency. A metal recovery method including: mixing a liquid containing a metal ion with a yeast to adsorb the metal ion by the yeast in the resulting mixed liquid; separating the yeast from the mixed liquid obtained in the adsorption process; and recovering the metal ion from the yeast separated in the separation process, wherein the metal ion to be adsorbed by the yeast in the adsorption process is a rare earth ion and/or a precious metal ion.

## Description

### Technical Field

The present invention relates to a metal recovery method.

### Background Art

In recent years, as a method for recovering metals, a recovery method using biosorption, which uses biological materials such as microorganisms as adsorbents, has been studied. Since this method uses inexpensive biological materials, it is expected to recover metals from low-grade minerals, industrial wastewater, electronic equipment waste and so on, at a low cost and with low environmental impact.

Various techniques have been proposed for recovering precious metals and rare earths (rare earth elements) by using biosorption recovery methods.

For example, Patent Literature 1 discloses a method for recovering precious metals, including a step of contacting baker's yeast with precious metal ions in a liquid containing the precious metal ions and having a pH of 4 or lower, and a step of burning the yeast separated from the liquid. Specifically, the literature describes examples of recovering gold ions, platinum ions, and palladium ions as precious metal ions, and also describes how platinum ions can be recovered from a liquid with a pH of 1.2 that contains chromium ions.

Patent Literature 2 discloses a gold recovery method including a step of contacting a yeast with a solution containing gold ions, iron ions, copper ions, and halide ions under an acidic condition, a step of performing solid-liquid separation, and a step of burning the mixture containing the baker's yeast and gold. Examples of pH conditions of the solution include pH less than 0, pH of 0.55, and pH of 1.12.

Patent Literature 3 discloses a method for recovering rare earths, including a step of mixing a solution containing rare earths and milt to cause the rare earths to be adsorbed by the milt (the pH of the mixed liquid is preferably 3 or above, more preferably about pH of 4), a step of collecting the milt from the mixed liquid, and a step of adding an acid solution to the collected milt to separate the rare earths and the milt. It is also described that Nd and Dy can be selectively recovered from solutions in which Fe coexists.

Non-patent Literature 1 describes that the amount of adsorption of heavy metal ions such as Cd²⁺, Cu²⁺, Pb²⁺, and Zn²⁺ can be increased by using a phosphorylated baker's yeast, compared to a non-phosphorylated baker's yeast. It is also described that the non-phosphorylated baker's yeast can also adsorb rare-earth ions such as Ce³⁺, Dy³⁺, Gd³⁺, La³⁺, Nd³⁺, Y³⁺, and Yb³⁺ with high efficiency. Furthermore, it is described that the p non-phosphorylated baker's yeast can selectively adsorb rare earth ions (Nd³⁺ and Yb³⁺) from aqueous solutions containing heavy metals and the rare earth ions.

### Citation List

### Patent Literature

Patent Literature 1: JP2016-183371A
Patent Literature 2: JP2018-35413A
Patent Literature 3: JP2013-213272A

### Non-Patent Literature

Non-Patent Literature 1: Yoshihiro Ojima, et al, Recovering metals from aqueous solutions by biosorption onto phosphorylated dry baker's yeast, SCIENTIFIC REPORTS, Published online: 18, January 2019, www.nature.com/scientificreports

### Summary of Invention

### Technical Problem

Conventional metal recovery methods that do not use biological materials have the problem of high environmental impact due to CO₂ emissions, sludge disposal, etc.

Further, there is a need for further improvement in efficiency and/or selectivity for conventional metal recovery methods that use biological materials. In addition, the recovery methods described in Patent Literatures 1-3 and Non-Patent Literature 1 are batch-type and at the laboratory test level, and have a problem of low productivity.

The recovery method described in Non-Patent Literature 1 requires chemical modification of yeast, which is an adsorbent, and accordingly has the problem of increasing the cost of the adsorbent.

It is an object of the present invention to solve the problems in view of the above circumstances, and to provide a metal recovery method that has a low environmental impact and that can achieve metal recovery at low cost and with high efficiency. It is another object of the present invention to provide a metal recovery method that has a low environmental impact and high productivity and that is suitable for industrialization.

### Solution to Problem

The present invention includes the following aspects.
[1] A metal recovery method comprising:
   mixing a liquid containing a metal ion with a yeast to adsorb the metal ion by the yeast in the resulting mixed liquid;
   separating the yeast from the mixed liquid obtained in the adsorption process; and
   recovering the metal ion from the yeast separated in the separation process,
   wherein the metal ion to be adsorbed by the yeast in the adsorption process is a rare earth ion and/or a precious metal ion.
[2] The metal recovery method according to item [1], wherein the metal ion is a rare earth ion, and
   a pH of the mixed liquid in the adsorption process is 2.5 or higher and lower than 7.
[3] The metal recovery method according to item [1], wherein the metal ion is a precious metal ion, and
   a pH of the mixed liquid in the adsorption process is lower than 4.
[4] The metal recovery method according to item [1] or [2], wherein the metal ion includes a Nd ion or a Dy ion.
[5] The metal recovery method according to item [1] or [3], wherein the metal ion includes a gold ion.
[6] The metal recovery method according to any one of items [1] to [5], wherein the liquid before mixing with the yeast further contains an ion of a metal other than rare earths or precious metals.
[7] The metal recovery method according to item [6], wherein the metal other than rare earths or precious metals includes at least one selected from the group consisting of iron, copper, nickel, aluminum, manganese, magnesium, and zinc.
[8] The metal recovery method according to item [6] or [7], wherein the metal ion is a precious metal ion, and the adsorption process comprises adding a metal ion sequestering agent capable of binding to metal ions other than precious metals to the liquid before mixing the yeast or the mixed liquid.
[9] The metal recovery method according to item [8], wherein the metal ion sequestering agent is citric acid or a salt thereof.
[10] The metal recovery method according to any one of items [1] to [9], wherein the yeast is a baker's yeast.
[11] The metal recovery method according to any one of items [1] to [10], wherein in the adsorption process, the liquid and the yeast are continuously fed into a mixing vessel, and the mixed liquid containing the liquid and the yeast is continuously discharged from the mixing vessel.
[12] The metal recovery method according to any one of items [1] to [11], wherein in the separation process, the mixed liquid obtained in the adsorption process is subjected to a solid-liquid separation to obtain a separated solid fraction, and
   in the recovery process, the separated solid fraction obtained in the separation process is subjected to an acid-treatment to recover the metal ion adsorbed by the yeast.
[13] The metal recovery method according to any one of items [1] to [11], wherein in the separation process, the mixed liquid obtained in the adsorption process is subjected to a solid-liquid separation to obtain a separated solid fraction, and
   in the recovery process, the separated solid fraction obtained in the separation process is subjected to a heat treatment to burn the yeast, and thereby the metal ion adsorbed by the yeast is recovered as a concentrate thereof.
[14] The metal recovery method according to item [13], wherein in the recovery process, the heat treatment of the separated solid fraction is performed by burning in an industrial furnace.
[15] The metal recovery method according to item 13 or 14, comprising recovering powder from an exhaust gas of the heat treatment, and mixing the recovered powder with the separated solid fraction before the heat treatment.
[16] The metal recovery method according to any one of items 12 to 15, wherein the solid-liquid separation is performed by at least one selected from the group consisting of centrifugation, filtration, membrane separation, and sedimentation separation.
[17] The metal recovery method according to any one of items 12 to 16, further comprising drying the separated solid fraction to lower the water content thereof.
[18] The metal recovery method according to any one of items 12 to 17, wherein a separated liquid obtained by the solid-liquid separation in the separation process is mixed with the liquid containing the metal ion before mixing with the yeast.

### Advantageous Effects of Invention

According to an embodiment of the present invention, a metal recovery method that can achieve metal recovery at low cost and with high efficiency can be provided. According to another embodiment of the present invention, a metal recovery method that has high productivity and is suitable for industrialization can be provided. Furthermore, according to the embodiments, a metal recovery method that has a lower environmental impact than conventional methods can be provided.

### Brief Description of Drawings

FIG. 1 is a block flow diagram illustrating an embodiment of the metal recovery method according to the present invention.
FIG. 2 is a block flow diagram illustrating another embodiment of the metal recovery method according to the present invention.
FIG. 3 is a schematic diagram of an example of the configuration of an apparatus that can be used for an embodiment of the metal recovery method according to the present invention.
FIG. 4 is a schematic diagram of an example of the configuration of an apparatus that can be used for another embodiment of the metal recovery method according to the present invention.
FIG. 5 is a graph showing the adsorption effect (change over time) of metal ions (Dy ions) from a metal-containing solution when using a yeast.
FIG. 6 is a graph showing the adsorption effect (pH dependence) of metal ions (Dy ions) from a metal-containing solution when using a yeast.
FIG. 7 is a graph showing the adsorption effect (change over time) of metal ions (Nd and Dy ions) from a metal-containing solution when using a yeast.

### Description of Embodiments

Preferred exemplary embodiments of the present invention will be described below.

In the following description, "liquid containing a metal ion" before mixing with yeast is also referred to as "dissolved metal solution" as appropriate.

Yeasts that can be used in the embodiments of the present invention are not limited as long as the yeasts can adsorb metal ions (preferably rare earth ions or precious metal ions) to be recovered, but a baker's yeast is preferred. Such a yeast, especially a baker's yeast, is readily available and easy to handle, thus reducing costs. In addition, in the embodiment of the present invention, since the adsorption rate of metal ions onto the yeast is fast, the treatment efficiency of the dissolved metal solution can be increased, and thereby the capacity of a mixing vessel used for mixing the dissolved metal solution and the yeast can be reduced, and a recovery device used in the embodiments of the present invention can be made smaller.

As the yeast used in the embodiments of the present invention, a yeast having an isoelectric point in the range of pH3.5 to 4.5 can be used. For example, a baker's yeast has an isoelectric point of around pH4. By using the yeast with such an isoelectric point, and controlling the pH of the mixed liquid containing the yeast in the adsorption process to a predetermined range, the recovery efficiency can be increased, or the selectivity can be increased in addition to the recovery efficiency. Even if the isoelectric point of the yeast is outside the range of pH3.5 to 4.5, the metal recovery efficiency and selectivity can be controlled by controlling the pH according to its isoelectric point.

Yeasts of the genus Saccharomyces are preferred as common baker's yeasts, and Saccharomyces cerevisiae is more preferred.

Yeasts of the genus Saccharomyces, which are representative of budding yeasts, include S bayanus, S. boulardii, S. bulderi, S. cariocanus, S. cariocus, S. cerevisiae, S. chevalieri, S. dairenensis, S. ellipsoideus, S. florentinus, S. kluyveri, S. martiniae, S. monacensis, S. norbensis, S. paradoxus, S. pastorianus, S. spencerorum, S. turicensis, S. unisporus, S. uvarum, and S. zonatus.

Other yeasts that can be used in embodiments of the invention include, for example, yeasts of Candida, Torulopsis, Zygosaccharomyces, Schizosaccharomyces, Pichia, Yarrowia, Hansenula, Kluyveromyces, Debaryomyces, Geotrichum, Wickerhamia, Fellomyces, and Sporobolomyces.

The yeasts used in the embodiments of the present invention do not need to be alive, and dead yeast such as waste yeast can be used as long as the adsorption function of metal ions is not inhibited. The use of dead microorganisms such as waste yeast not only reduces costs, but also reduces environmental impact through life cycle assessment (LCA). Furthermore, while the use of live yeast is affected by environmental factors (e.g., low ambient temperatures will cause the yeast to cease activity), the use of dead yeast is less affected by environmental factors.

In the metal recovery method according to the embodiment of the present invention, the metal to be recovered is one that can be adsorbed by the yeast when it is contained in a solution as a metal ion, and rare earths or precious metals are preferred.

The above rare earths, also called "rare earth elements" include scandium (Sc), yttrium (Y), and lanthanides (the 15 elements from lanthanum (La) to lutetium (Lu) in the periodic table). In other words, the rare earths are scandium (Sc), yttrium (Y), lanthanum (La), cerium (Ce), praseodymium (Pr), neodymium (Nd), promethium (Pm), samarium (Sm), europium (Eu), gadolinium (Gd), terbium (Tb), dysprosium (Dy), holmium (Ho), erbium (Er), thulium (Tm), ytterbium (Yb), and lutetium (Lu).

The above precious metals include gold (Au), silver (Ag), platinum (Pt), palladium (Pd), rhodium (Rh), iridium (Ir), ruthenium (Ru) and osmium (Os).

The liquid containing a metal ion (dissolved metal solution) in the embodiments of the present invention is a liquid containing ions of at least one metal selected from the above metals (the above rare earths and/or the above precious metals).

In the metal recovery method according to the embodiment of the present invention, the dissolved metal solution is not limited as long as it contains ions of the metal to be recovered, but when the metal to be recovered contains a rare earth, a liquid containing at least one rare earth ion selected from ions of the 15 elements of lanthanides can be used. Specifically, a liquid containing at least one rare earth ion selected from ions of Sc, Y, La, Ce, Pr, Nd, Pm, Sm, Eu, Gd, Tb, Dy, Ho, Er, Tm, Yb and Lu can be used, and preferably, a liquid containing at least one rare earth ion selected from ions of Nd, Pm, Sm, Eu, Gd, Tb, Dy, Ho, Er, Tm, Yb and Lu can be used, and more preferably, a liquid containing at least one of Nd ion or Dy ion can be used.

In the metal recovery method according to the embodiment of the present invention, the dissolved metal solution is not limited as long as it contains ions of the metal to be recovered, but when the metal to be recovered contains a precious metal, for example, a liquid containing at least one ion selected from the group of gold ions, platinum ions and palladium ions, or a liquid containing at least gold ions can be used.

In the metal recovery method according to the embodiment of the present invention, the dissolved metal solution can also contain a heavy metal ion as an ion of metal other than rare earths and precious metals (which is an ion of metal not intended for recovery), and the heavy metal ion includes ions of heavy metals such as chromium, manganese, iron, cobalt, nickel, copper and zinc. The dissolved metal solution in the embodiment of the present invention may also contain an ion of a light metal such as aluminum, magnesium, or titanium.

The solvent of the dissolved metal solution in the embodiments of the present invention is preferably water or an aqueous solvent containing water, and may contain water-soluble solvents other than water as long as adsorption using the yeast is not impaired. Water-soluble solvents include alcohols such as methanol, ethanol and propanol, acetone, acetonitrile, dioxane, tetrahydrofuran, dimethylformamide, dimethylacetamide, and dimethylsulfoxide. The water content in the solvent is preferably 70 to 100% by volume, more preferably 80 to 100% by volume, and even more preferably 90 to 100% by volume, and it is particularly preferred that the solvent is water.

The dissolved metal solution (liquid to be mixed with yeast) in the embodiments of the present invention can be prepared by treating something from which a metal ion can be extracted (hereinafter referred to as "recovery object").

The recovery object is not limited as long as a metal ion can be extracted, and includes a solid or liquid containing a metal, a metal ion, or a salt thereof.

As a treatment method for extracting a metal ion from the recovery object into a liquid, for example, when the recovery object is soil such as rare earth mud, mineral resources, alloys, metal scrap, used catalysts, or an urban mine such as waste electrical and electronic equipment, etc., acid treatment can be performed to obtain a dissolved metal solution. When the recovery object is factory effluent or mine drainage, a dissolved metal solution can be obtained by performing dilution or concentration treatment, solvent substitution, or pH adjustment as necessary.

If the recovery object contains a metal or its ions or salts that are not intended for recovery, the liquid obtained from the recovery object may contain an ion of the metal that is not intended for recovery.

It is preferable to remove insoluble material from the dissolved metal solution obtained by treating the recovery object before mixing with yeast.

The metal recovery method according to the embodiment of the present invention is an industrially useful technique as a method for recovering metals from various sources, such as soil such as rare earth mud, mineral resources, alloys, metal scrap, used catalysts, urban mines such as waste electrical and electronic equipment, factory effluent, mine drainage, or metal solutions in which low concentrations of metal ions remain after recycling treatment.

To adjust the pH of the dissolved metal solution, an acid such as hydrochloric acid or sulfuric acid, or an alkali such as an aqueous sodium hydroxide solution can be added to the dissolved metal solution as a pH adjuster before mixing with the yeast. After mixing the dissolved metal solution and the yeast, an acid such as hydrochloric acid or sulfuric acid, or an alkali such as an aqueous sodium hydroxide solution may be added as a pH adjuster to adjust the pH of the resulting mixed liquid.

In the adsorption process in the embodiment of the present invention, the dissolved metal solution and the yeast are mixed, and metal ions are adsorbed by the yeast in the resulting mixed liquid. The adsorption process can be performed under atmospheric pressure conditions.

From the point of view of enhancing the adsorption effect of metal ions onto the yeast, it is preferable that the pH of the mixed liquid is within a suitable pH range depending on the type of metal to be recovered.

By setting the pH of the mixed liquid in the adsorption process to be within a pH range according to the type of metal to be recovered, the amount of metal ions adsorbed by the yeast (recovery efficiency) and/or selectivity can be increased.

The pH of the mixed liquid is, for example, preferably -1 or higher, more preferably 0 or higher, even more preferably 1 or higher, and preferably less than 7, more preferably 6.5 or less.

In particular, when the metal ions to be adsorbed by the yeast are rare earth ions, the pH of the above mixed liquid can be set to 2.5 or higher, preferably 2.7 or higher, more preferably 3 or higher, even more preferably 4 or higher, and pH 5 or higher is especially preferred. The upper limit of pH is not particularly limited, but from the point of view of preventing the rare earth ions from forming hydroxide precipitates, the pH of the mixed liquid is preferably acidic, less than 7, and more preferably 6.5 or less.

By adjusting the pH of the mixed liquid, in addition to improving the recovery efficiency of rare earth ions, it is possible to increase the selectivity of adsorption of rare earth ions over metal ions that are not intended for recovery. For example, high selectivity of rare earth ions with respect to divalent metal ions of Mn, Zn, Mg, etc. can be expected. For metal ions such as Cu ions, whose adsorption efficiency increases with time, the selectivity of rare earth ions can be increased by adjusting the time of the adsorption process (adsorption time) as described below.

High selectivity of rare earth ions with respect to metal ions that precipitate by pH adjustment can also be expected. For example, trivalent Fe ion precipitates as hydroxides by pH adjustment, and the concentration of Fe ions in the liquid phase decreases, thus lowering the amount of Fe ions adsorbed by the yeast and increasing the selectivity of a target rare-earth ion.

On the other hand, when the metal ions to be adsorbed by the yeast are precious metal ions, it is more preferable that the pH of the above mixed liquid is less than 4. When the pH of the mixed liquid is less than 4, the selectivity can be increased in addition to improving the recovery efficiency of precious metal ions.

The reasons why the adsorption of metal ions onto the yeast is affected by pH are inferred as follows.

Since the isoelectric point of yeast is around pH4, under conditions less than pH4, the surface of yeast has more positively charged functional groups, and under a pH 4 or higher conditions, the surface of yeast has more negatively charged functional groups.

For example, since rare earth ions exist in liquid as cations with high valence (e.g. Dy³⁺, Nd³⁺), when recovering rare earth ions, it is preferable that there are few positively charged functional groups on the surface of the yeast. That is, a pH3 condition with few positively charged functional groups or a higher pH condition is preferred, a pH4 condition near the isoelectric point or a higher pH condition is more preferred, a pH5 condition with more negatively charged functional groups or a higher pH condition is even more preferred, and a pH5.5 or higher condition is further preferred. When recovering rare earth ions, the pH of the mixed liquid in the adsorption process can be set in the range of, for example, pH2.5 or higher (preferably pH4 or higher) and less than pH7 (preferably less than pH6.5).

On the other hand, precious metal ions form anionic complexes (e.g., [AuCl₄]⁻, [PtCl₆]²⁻) at pH4 or below, and thus are more easily adsorbed under conditions below pH4, in which the number of positively charged functional groups increases. In fact, the precious metal ions are sufficiently adsorbed by the yeast at a pH less than pH4, and therefore it is preferable to adjust the pH of the mixed liquid containing yeast to less than pH4. When recovering precious metal ions, the pH of the mixed liquid in the adsorption process can be set in the range of, for example, pH-1 or higher (preferably pH0 or higher) and less than pH4 (preferably pH3 or lower).

When the metal to be recovered is a precious metal, a metal ion sequestering agent that binds to ions of metals other than precious metals may be added to the dissolved metal solution. Such metal ion sequestering agents combine with ions of metals not intended for recovery (e.g., heavy metals) to form complexes. The formation of this complex prevents adsorption onto the yeast and enhances the selectivity of the metal ion to be recovered. Examples of the metal ion sequestering agent include at least one hydroxycarboxylic acid selected from citric acid, tartaric acid, and gluconic acid, or a salt thereof. Among such metal ion sequestering agents, citric acid or its salt is preferred because it is easily available and inexpensive.

The amount of the metal ion sequestering agent added is preferably the same as or greater than the concentration of metal ions not intended for recovery, more preferably 1.5 times or more of the amount of the metal ions, and especially preferably 1.7 times or more of the amount of the metal ions. Although the upper limit of the amount of the metal ion sequestering agent added is not limited, sufficient effect can be obtained with twice the amount or less of the amount of the metal ions.

The metals that form complexes that are inhibited from adsorption onto the yeast by such a metal ion sequestering agent (the metals not intended for recovery) are not limited as long as they become cations in solution and form complexes with citric acid, but examples thereof include heavy metals such as iron, nickel, and copper.

The addition of such a metal ion sequestering agent to the dissolved metal solution enhances the selectivity of the metal ion to be recovered in the dissolved metal solution in which the metal ion to be recovered coexists with other metal ions not to be recovered.

The temperature of the mixed liquid of the dissolved metal solution and the yeast in the adsorption process can be set in the range of 1 to 40°C, for example. From the point of view of energy cost for temperature control, adsorption performance of the yeast, and stability of the yeast and the metal ions in the liquid, the temperature is preferably 10°C or higher, more preferably 15°C or higher, even more preferably 20°C or higher, while the upper limit of temperature is preferably 35°C or lower.

The time for adsorption of metal ions onto the yeast in the adsorption process (hereinafter referred to as "adsorption time") is set according to the pH of the mixed liquid, the content and type of metal ions, and when other metal ions not intended for recovery are included, the content and type thereof, etc., but the adsorption time can be set, for example, in the range from 10 minutes to 24 hours. The adsorption time is preferably 30 minutes or longer from the point of view of sufficient adsorption of metal ions onto the yeast, while from the viewpoint of efficiency, it is preferably 12 hours or less, more preferably 8 hours or less, and even more preferably 6 hours or less.

When recovering metal ions under a condition where adsorption of metal ions onto the yeast can be completed in a relatively short period of time, the adsorption time can be set to, for example, 2 hours or less, or 1 hour or less, and can even be set to 30 minutes or less. When other metal ions which are not intended for recovery and take time to be adsorbed by the yeast coexist in the mixed liquid with metal ions which are to be recovered and can be adsorbed by the yeast in a relatively short time, the selectivity of the metal ions to be recovered can be increased by adjusting the adsorption time.

In the adsorption process, the concentration of the metal ion to be recovered in the dissolved metal solution or in the mixed liquid of the dissolved metal solution and the yeast, and the concentration of other metal ions not intended for recovery when the dissolved metal solution contains them, can be adjusted according to the yeast cell concentration.
For example, the concentration of the metal ion to be recovered and the concentration of other metal ions not intended for recovery can be appropriately set in the range of 1 × 10⁻⁶ mol/m³ to 1 × 10³ mol/m³, and from the point of view of efficiency of recovery, it is preferably 1 × 10⁻³ mol/m³ or more, more preferably 1 × 10⁻² mol/m³ or more, and from the point of view of recovery efficiency and/or selectivity, it is preferably 1 × 10² mol/m³ or less, more preferably 10 mol/m³ or less, even more preferably 5 mol/m³ or less.

In the adsorption process, the cell concentration (microbial cell concentration) in the mixed liquid of the dissolved metal solution and the yeast can be appropriately set according to the concentration of metal ions to be adsorbed by the yeast, for example, it can be set in the range of 1.0 × 10⁶cells/m³ to 1.0 × 10¹⁸cells/m³, preferably 1.0 x 10¹⁰cells/m³ to 1 × 10¹⁶cells/m³, more preferably 1.0 × 10¹²cells/m³ to 1 × 10¹⁶cells/m³.

The adsorption process can be a process of continuously feeding the dissolved metal solution and the yeast into a mixing vessel and continuously taking out the mixed liquid containing the dissolved metal solution and the yeast from the mixing vessel. The adsorption process can be performed continuously by keeping the feed amount and the taking out amount the same. The mean residence time in steady state can be appropriately set according to the conditions related to the above-mentioned adsorption process.

In the separation process in the embodiment of the present invention, the yeast on which metal ions are adsorbed is separated from the mixed liquid containing the dissolved metal solution and the yeast.

This separation can be performed by a common method for solid-liquid separation, such as centrifugation, filtration, membrane separation, and sedimentation separation. Two or more of these separation methods may be combined.

In the recovery process after the separation process in the embodiment of the present invention, the metal ions are recovered from the yeast separated in the separation process.

The metal ions adsorbed by the yeast can be recovered as a concentrate thereof by burning the yeast, or when the metal ions are precious metal ions, they can be recovered as a lump metal of their reduced form.

Also, by acid-treating the yeast, the metal ions adsorbed by the yeast can be desorbed. As the acidic solution used for this acid treatment, for example, an acidic solution having a pH of 2 or less, such as hydrochloric acid, sulfuric acid and aqua regia, can be used.

When solid-liquid separation is performed in the separation process, the separated solid fraction containing the yeast can be heat-treated to burn off the yeast. The separated solid fraction containing the yeast may be subjected to a drying treatment to reduce the water content, if necessary, and then heat-treated.

For the heat treatment to burn the yeast, a conventional industrial furnace such as an incinerator, a burning furnace, and a combustion furnace can be used. From the viewpoint of a continuous process suitable for industrialization, it is preferable to use a rotary kiln.

The temperature for burning the yeast can be set as appropriate as long as it is a temperature at which the yeast can burn, but it can be set, for example, to 300°C or higher. From the point of view of burning the yeast more sufficiently, the temperature is preferably 400°C or higher, more preferably 500°C or higher, while from the point of view of preventing metal oxidation and energy costs, the temperature is preferably 800°C or lower, more preferably 750°C or lower.

The yeast to be fed to the furnace may be in a wet state immediately after the separation or in a powder form that is subjected to a drying treatment after the separation.

The yeast after burning is sublimated or converts into ashes, and the metal ion adsorbed by the yeast can be recovered as its concentrate. When the metal ion is a precious metal ion, it forms a lump metal that is its reduced form, and can be recovered as the lump metal.

As explained above, the metal recovery method according to the embodiment of the present invention includes the adsorption process, the separation process, and the recovery process, which are performed in this order.

Although each of these processes may be performed separately, it is preferable to perform them consecutively from the viewpoint of productivity. The process of the method including these processes may be repeated multiple times in a batch manner, but it is preferable to perform the process of the method continuously from the point of view of productivity.

Hereinafter, the process of the metal recovery method according to the embodiment of the present invention will be explained using the drawings.

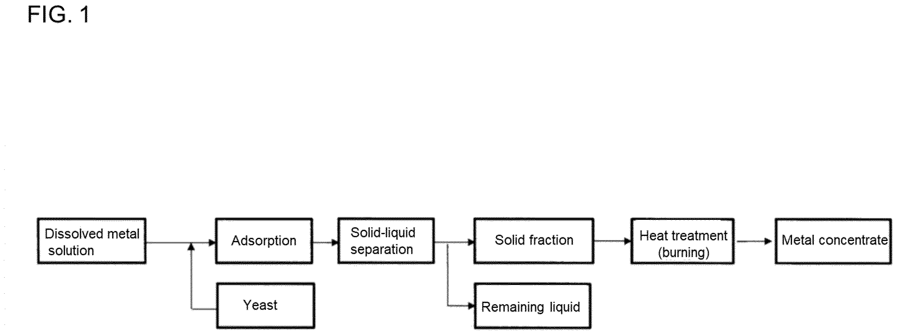

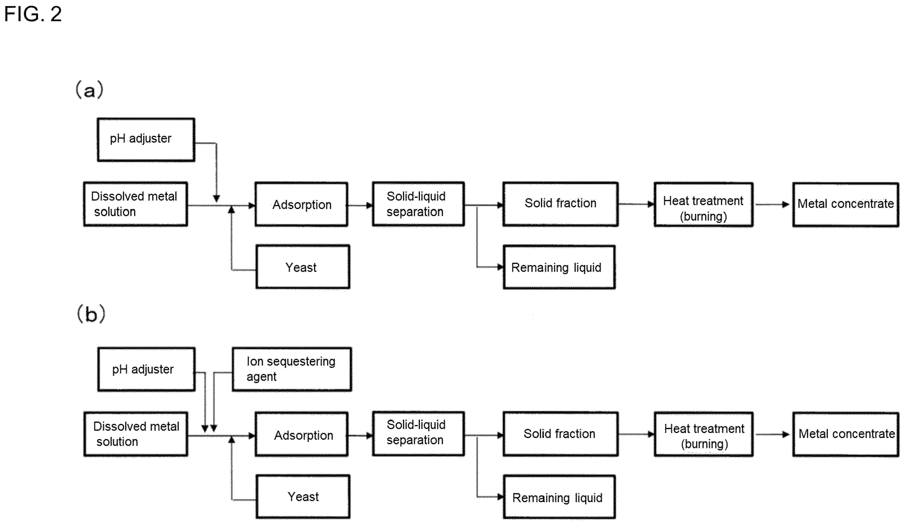

FIGs. 1 and 2 are block flow diagrams for illustrating the metal recovery method according to the embodiment of the present invention.

As shown in FIG. 1, a liquid containing a metal ion (dissolved metal solution) is first prepared.

Next, the dissolved metal solution is mixed with the yeast, and the metal ion is adsorbed by the yeast under predetermined pH and temperature conditions.

If the pH of the dissolved metal solution is not within the predetermined range, a pH adjuster (acid or alkali) can be added to the dissolved metal solution before mixing the yeast or to a mixed liquid after mixing the yeast to adjust it to the predetermined range. FIG 2(a) shows a case where the pH adjuster is added to the dissolved metal solution before mixing the yeast. If the pH of the dissolved metal solution is within a predetermined range, it is not necessary to perform the pH adjustment. However, if the pH of the mixed liquid changes during the adsorption process and falls outside the predetermined range, it is preferable to perform the pH adjustment. If the pH of the mixed liquid is not within the predetermined range during the adsorption process, a pH adjuster (acid or alkali) can be added to the mixed liquid to adjust it to the predetermined range.

When the dissolved metal solution contains metal ions not intended for recovery, a metal ion sequestering agent such as citric acid or its salt can be added. When the pH adjuster is added, the metal ion sequestering agent can be added before or after or simultaneously with the addition of the pH adjuster. FIG 2(b) shows a case where the pH adjuster and the metal ion sequestering agent are added to the dissolved metal solution before mixing the yeast.

After a predetermined time has elapsed after mixing the dissolved metal solution and the yeast (after the adsorption process is completed), the mixed liquid is subjected to a solid-liquid separation to obtain solid fraction and remaining liquid (solid-liquid separation process).

Next, the obtained solid fraction is heat-treated to burn off the yeast contained in the solid fraction, and the metal ion adsorbed by the yeast is recovered as its concentrate or a metal ingot (recovery process).

The solid fraction obtained by the solid-liquid separation may be fed to a heat treatment furnace after washing if necessary. The solid fraction obtained by the solid-liquid separation may be fed to the heat treatment furnace after being subjected to a drying treatment to reduce the water content.

When the metal ion recovery process is performed multiple times in a batch manner or continuously using, for example, the apparatus described below, the remaining liquid obtained by the solid-liquid separation can be mixed with the dissolved metal solution before mixing the yeast, if necessary. Depending on the separation efficiency of the solid-liquid separation, the remaining liquid may be returned to the mixed liquid in the solid-liquid separation process.

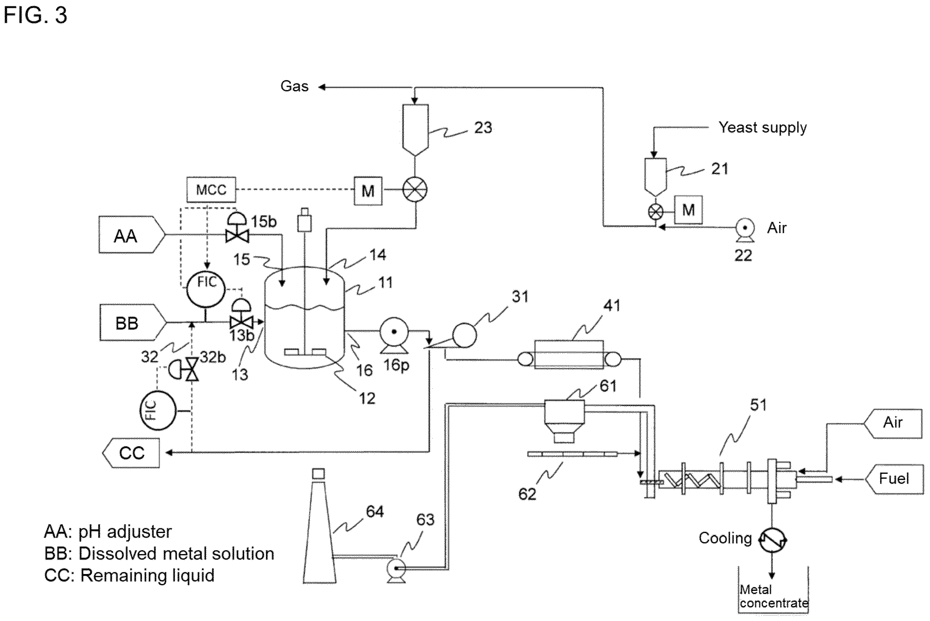

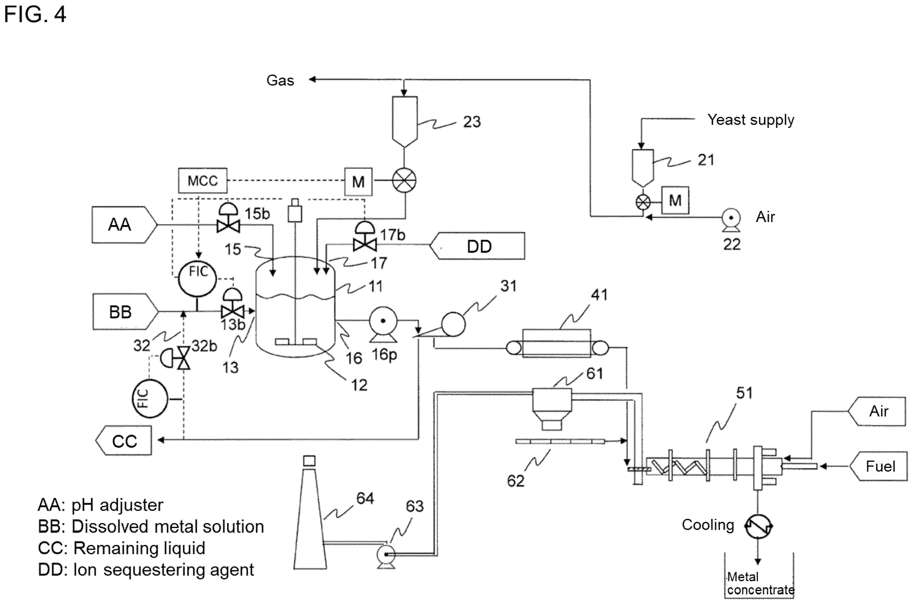

FIGs. 3 and 4 show schematic diagrams of exemplary configurations of apparatuses that can be used for the metal recovery method according to the embodiment of the present invention.

The apparatus shown in FIG 3 has, as its main components, a mixing vessel 11 for the adsorption process, a solid-liquid separator 31 for the separation process, and a heat treatment furnace 51 for the recovery process. Between the solid-liquid separator 31 and the heat treatment furnace 51, a dryer 41 for drying the solid fraction separated by the solid-liquid separator 31 is provided in order to efficiently burn the yeast in the heat treatment furnace 51. A dust collector 61 is connected to the exhaust gas outlet side of the heat treatment furnace 51 (on the supply port side of the separated solid fraction) in order to collect the powder in the exhaust gas, and the exhaust gas that passes through the dust collector 61 is blown to a flare stack 64 by a blower 63.

The mixing vessel 11 is equipped with an agitator 12 and a temperature control means (not shown) for controlling the temperature inside the vessel. By the agitator 12, the yeast can be mixed so that it is uniformly dispersed in the dissolved metal solution. As the temperature control means, for example, a heat medium circulation system which includes piping located in the vessel and a temperature controller for adjusting the temperature of a heat medium for cooling or heating that flows through the piping can be used.

The dissolved metal solution is fed to the mixing vessel 11 from an inlet 13 via a control valve 13b. The pH adjuster is also fed to the mixing vessel 11 from an inlet 15 via a control valve 15b.

In addition, as shown in FIG 4, the metal ion sequestering agent can be fed from an inlet 17 via a control valve 17b. The configuration of the facility shown in FIG 4 is the same as in FIG 3, except for the part pertaining to the injection of the ion sequestering agent.

After the yeast is stored in a storage section 21, it is transferred to a feeder 23 by air from an air pump 22 via a powder flow regulator such as a rotary valve directly below the storage section 21, and then fed into the mixing vessel 11 from a yeast feed port 14 via a powder flow regulator such as a rotary valve directly below the feeder 23.

As the feeder 23, a powder feeder such as a belt type feeder, table type feeder, screw type feeder, vibratory type feeder, and rotary gravity type feeder can be used.

From the mixing vessel 11, the mixed liquid in the vessel can be taken out from an taking out part 16, and the taken-out mixed liquid is sent to the solid-liquid separator 31 by a feed pump 16p.

As the solid-liquid separators 31, a sedimentation separator, a centrifugal separator, a membrane separator, a filtration apparatus, etc. can be used, and a combination of two or more of these can be used.

When filtration such as pressure filtration or centrifugal filtration is performed for the solid-liquid separation, the air permeability of the filter cloth is preferably 30 cc/cm²/min or less because the particle size of the yeast is very small, ranging from 1µm to 50µm with an average particle size of about 7µm. However, since reducing the air permeability of the filter cloth will greatly increase the filtration time, it is preferable to have a moderate air permeability. If the particle size of the yeast is small and the air permeability of the filter cloth is large, it may leak from the filter cloth. In such cases, it is preferable to recycle the yeast by feeding the leaked slurry to the solid-liquid separator or to a solid-liquid separator of another batch. This makes it possible to reduce the loss of yeast recovery.

A filtration aid may be added to the mixed liquid to reduce leakage from the filter cloth. When using a filtration aid, it is desirable to use a filtration aid which is bio-derived such as cellulose and can be burned in a downstream burning facility. Furthermore, the use of the filtration aid can reduce the filtration time.

When using a filter cloth, it should be noted that the yeast has a tendency to pass through the filter cloth more easily when it is in contact with the solvent for a long time. This is thought to be because the yeast easily changes its shape as it acclimates to the solvent or is subjected to shearing force due to prolonged agitation, and the yeast that is subjected to centrifugal force or pressure can easily escape through the mesh of the filter cloth. Although the separation performance varies depending on the yeast concentration, since the separation performance can be maintained if the contact time is several hours, it is preferable that the contact time between the yeast and the solvent is within about several hours, although it depends on the air permeability of the filter cloth.

In the case of centrifugal filtration, a centrifugal force of 600 G is sufficient to separate the yeast adsorbing the metal ion, and can be set to 500 to 700 G, for example.

In the solid-liquid separation, when using a solution with a pH of less than 2, it is preferable to use an acid-resistant material such as Teflon (registered trademark) coating, titanium, and Hastelloy (registered trademark). When using a solution with pH3 or higher or pH4 or higher, materials made of SUS can be used.

When a sedimentation centrifuge is used as the solid-liquid separator, a centrifugal force of 600 G or higher is preferred. The preferred processing time varies depending on the centrifugal force, but if the centrifugal force is 600 G, the processing time is preferably 5 to 10 minutes, and if it is 1000 G or higher, the processing time is preferably about several minutes (e.g., 1 to 4 minutes). When reducing the water content of the solid fraction after the solid-liquid separation, the centrifugal force should be 1000 G or higher.

On the other hand, depending on the subsequent process (for example, when the solid fraction after the solid-liquid separation is to be washed), the separation may be performed in multiple stages with different centrifugal forces depending on the purpose, such as a multi-stage separation in which the solvent is roughly separated with a centrifugal force of about 600 G to obtain a highly fluid solid fraction (cake) with high water content, and a washing liquid is added to it and then washing is performed, and thereafter solid-liquid separation is performed with increased centrifugal force.

When the centrifugal force is 1000 G or higher, the solid-liquid separation is sufficient even within a minute of processing time, and if the leakage of the yeast into the filtrate is desired to be stably kept within a few percent, it is preferable that the processing time is set to several minutes.

When a solution with a pH of less than 2 is used in the solid-liquid separation, it is preferable to use an acid-resistant material such as Teflon (registered trademark) coating, titanium, and Hastelloy (registered trademark). When using solutions with pH 3 or higher or pH 4 or higher, materials made of SUS can be used.

Regarding taking out the solid fraction (including the yeast) after the solid-liquid separation, it can be performed using air blast in both cases of centrifugal filtration and centrifugal sedimentation. However, when the solid-liquid separation is performed under a condition of a low centrifugal force, the viscosity of the solid fraction may be so high that it becomes difficult to discharge by air blast, and in that case, it is preferable to scrape off the solid fraction manually. When the water content of the solid fraction is lowered by performing the solid-liquid separation with an increased centrifugal force, the solid fraction can be scraped off automatically, making it easy to automate the process to the next heat treatment process.

In addition, the solid-liquid separated solid fraction (including yeast) has the property of increasing fluidity over time. By using this property and lowering the viscosity of the solid fraction, it is possible to transport it to the next process using a pump.

The remaining liquid separated by the solid-liquid separator 31 can be mixed with the dissolved metal solution prior to feeding it to the mixing vessel 11 through a remaining liquid recycle line 32 via a control valve 32b.

The remaining liquid separated by the solid-liquid separator 31 may be returned to the solid-liquid separator 31 (not shown) if the yeast content is high.

The solid fraction separated by the solid-liquid separator 31 (separated solid fraction) is dried in the dryer 41 and then transferred to the heat treatment furnace 51. As the dryer 41, a dryer used for normal powder drying, such as an aeration type dryer and a rotary type dryer, can be used.

The separated solid fraction may be fed to the heat treatment furnace 51 without performing the drying process using the dryer 41, and both drying and heat treatment (burning) of the separated solid fraction may be performed in the heat treatment furnace 51, but from the point of view of increasing the efficiency of the heat treatment, it is preferable to dry the separated solid in advance.

In particular, when the acidity of the separated solid fraction is high (e.g., pH5 or lower), it is preferable to perform the drying process in advance. By performing the drying process, acidic components contained in the separated solid fraction can be removed, thus preventing acid corrosion of the heat treatment furnace 51.

When the acidity of the separated solid fraction is high (e.g., pH5 or lower) and the solid fraction is fed to the heat treatment furnace 51 without drying treatment, it is preferable to wash the separated solid fraction in advance to reduce the acidity, and the acidity is preferably set to pH5.2 to 7, more preferably pH6 to 7.

As the heat treatment furnace 51, an industrial furnace such as a common incinerator and an electric furnace can be used, and is not particularly limited as long as it is capable of burning the yeast, but a rotary kiln is preferable. By using the rotary kiln, drying of the separated solid fraction, combustion of the yeast, and recovery of the metal can be performed continuously.

The separated solid fraction fed to the heat treatment furnace 51 (e.g., rotary kiln) is sent gradually while rotating slowly, and is dried by combustion due to air and fuel fed from the side opposite to the feed side of the separated solid fraction, and then the yeast in the solid fraction is burned. As a result, the yeast is sublimated or converts into ashes, and the metal ions adsorbed by the yeast are recovered as a concentrate thereof. When the metal ion is a precious metal ion, it forms a metal of a reduced form thereof, and can be recovered in the form of a lump metal by cooling.

Exhaust gas from the heat treatment furnace 51 is blown to a flare stack 64 through the dust collector 61 by a blower 63. The powder collected by the dust collector 61 is mixed with the separated solid fraction before being fed to the heat treatment furnace 51 via a conveyance line 62 such as a belt conveyor. Since the recovered powder contains the yeast which adsorbs the metal ion, the metal recovery efficiency can be increased by mixing it with the separated solid fraction.

### Examples

Hereinafter, the present invention will be further explained in detail with reference to Examples and Comparative Examples, but the invention is not limited to the Examples.

### (Example 1)

First, as the dissolved metal solution, an aqueous solution containing Dy ions was prepared in the following manner. DyCl₃ was dissolved in pure water, and hydrochloric acid was added to adjust the pH to 4.5 to 5 to prepare 1.0 mol/m³ of a DyCl₃ aqueous solution.

Next, dried baker's yeast (manufactured by Oriental Yeast Co., Ltd., trade name: Dry Yeast 500G) was added to the obtained DyCl₃ aqueous solution so that the cell concentration was 5.0 x 10¹⁴ cells/m³ (18g/L of dried baker's yeast) to prepare a test solution, and the resulting test solution was agitated by shaking in an incubator (at 34°C). The cell concentration was measured by a hemocytometer method.

Next, portions of the test solution were periodically withdrawn and filtered through a filtration filter with a pore size of 0.2µm.

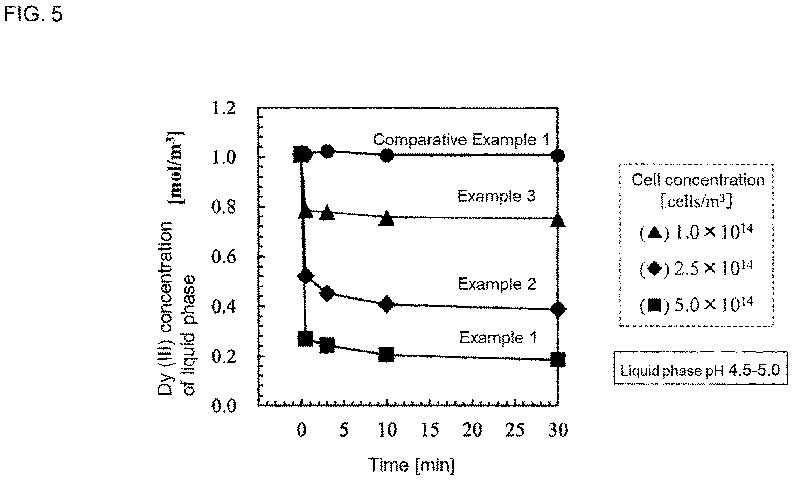

After performing the Dy ion recovery process as described above, the Dy ion concentrations (Dy(III) concentrations) in the resulting filtrates (liquid phases) were measured by ICP (Inductively Coupled Plasma) emission spectroscopy. The results are shown in FIG. 5. FIG. 5 clearly shows that the Dy(III) concentration in the liquid phase is decreasing, indicating that Dy ions are adsorbed by the solid fraction (recovered baker's yeast) obtained by filtration.

### (Example 2)

Dy ion recovery process with the yeast was performed in the same way as in Example 1, except that the cell concentration was changed to 2.5 x 10¹⁴ cells/m³ (9 g/L dried baker's yeast). The Dy ion concentration in the filtrate was measured in the same manner as in Example 1, and the results obtained are shown in FIG. 5.

### (Example 3)

Dy ion recovery process with the yeast was performed in the same way as in Example 1, except that the cell concentration was changed to 1.0 x 10¹⁴ cells/m³ (3.6 g/L dried baker's yeast). The Dy ion concentration in the filtrate was measured in the same manner as in Example 1, and the results obtained are shown in FIG. 5.

### (Comparative Example 1)

A test solution was prepared in the same manner as in Example 1 except that the dried baker's yeast was not added, and the resulting test solution was treated in the same manner as in Example 1 to measure the Dy ion concentration. The results are shown in FIG. 5.

### (Example 4)

First, as the dissolved metal solution, an aqueous solution containing Dy ions was prepared in the following manner. DyCl₃ was dissolved in pure water, and hydrochloric acid was added to adjust the pH to 3.0 to prepare 1.0 mol/m³ of a DyCl₃ aqueous solution.

Next, dried baker's yeast (manufactured by Oriental Yeast Co., Ltd., trade name: Dry Yeast 500G) was added to the obtained DyCl₃ aqueous solution so that the cell concentration was 4.4 × 10¹⁴ cells/m³ (16 g/L (1.6 wt%) of dried baker's yeast) to prepare a test solution, and the resulting test solution was agitated by shaking in an incubator (at 34°C). The cell concentration was measured by the hemocytometer method.

Next, after a predetermined time (10 minutes), a portion of the test solution was taken and filtered through a filtration filter with a pore size of 0.2 µm.

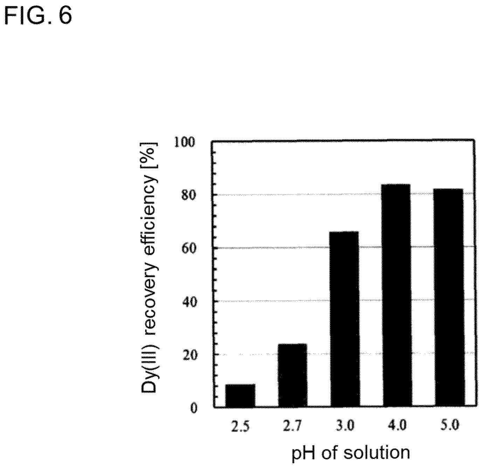

After performing the Dy ion recovery process as described above, the Dy ion concentration in the resulting filtrate was measured by ICP (Inductively Coupled Plasma) emission spectroscopy, and based on the obtained measurement result, the Dy recovery efficiency (the ratio of the amount of Dy ions adsorbed by the yeast to the amount of Dy ions in the dissolved metal solution before the addition of the yeast) was determined. The result is shown in FIG. 6.

The recovery efficiency (adsorption efficiency) was determined according to the following formula. Recovery efficiency (%) = (Dy ion concentration in the dissolved metal solution before the addition of the yeast - Dy ion concentration in the filtrate) / Dy ion concentration in the dissolved metal solution before the addition of yeast x 100

### (Example 5)

Dy ion recovery process with the yeast was performed in the same way as in Example 4, except that the pH of the DyCl₃ aqueous solution was set to 4.0. The Dy recovery efficiency based on the measured Dy ion concentration in the filtrate is shown in FIG. 6.

### (Example 6)

Dy ion recovery process with the yeast was performed in the same way as in Example 4, except that the pH of the DyCl₃ aqueous solution was set to 5.0. The Dy recovery efficiency based on the measured Dy ion concentration in the filtrate is shown in FIG. 6.

### (Example 7)

Dy ion recovery process with the yeast was performed in the same way as in Example 4, except that the pH of the DyCl₃ aqueous solution was set to 2.5. The Dy recovery efficiency based on the measured Dy ion concentration in the filtrate is shown in FIG. 6.

### (Example 8)

Dy ion recovery process with the yeast was performed in the same way as in Example 4, except that the pH of the DyCl₃ aqueous solution was set to 2.7. The Dy recovery efficiency based on the measured Dy ion concentration in the filtrate is shown in FIG. 6.

### (Example 9)

First, as the dissolved metal solution, an aqua regia leachate of waste electrical and electronic equipment (E-waste) was prepared and adjusted to pH 3.5 by adding a sodium hydroxide solution. The dissolved metal solution (aqua regia leachate after the pH adjustment) contained Au ions, and the concentration thereof was 183 ppm (mg/L).

Next, dried baker's yeast (manufactured by Oriental Yeast Co., Ltd., trade name: Dry Yeast 500G) was added to the solution so that the cell concentration was 5.0 x 10¹⁴ cells/m³ (18g/L dried baker's yeast) to prepare a test solution, and the test solution was agitated by shaking in an incubator (at 34°C).

Next, portions of the test solution were periodically withdrawn and filtered through a filtration filter with a pore size of 0.2µm.

After performing the Au ion recovery process as described above, the Au ion concentrations in the resulting filtrates were measured by ICP (Inductively Coupled Plasma) emission spectroscopy, and based on the measurement results obtained, the Au recovery efficiency (the ratio (%) of the amount of Au ions adsorbed by the yeast to the amount of Au ions in the dissolved metal solution before the addition of the yeast) was determined.

The recovery efficiency (adsorption efficiency) was determined according to the following formula. Recovery efficiency (%) = (Au ion concentration in the dissolved metal solution before the addition of the yeast - Au ion concentration in the filtrate)/Au ion concentration in dissolved metal solution before the addition of the yeast x 100

The Au recovery efficiencies (adsorption efficiencies) after 10 minutes, 1 hour, 2 hours, and 6 hours from the start of agitating by shaking of the test solution to which the yeast was added were all about 64%.

### (Example 10)

A test solution (pH < 0) was prepared, agitated by shaking, and filtered, and the Au ion concentration in the filtrate was measured, in the same manner as in Example 9, except that the pH adjustment with the sodium hydroxide solution was not performed. The Au recovery efficiency (adsorption efficiency) after 1 hour from the start of agitating by shaking was 34%.

### (Example 11)

First, as the dissolved metal solution, an aqua regia leachate of waste electrical and electronic equipment (E-waste) was prepared, and adjusted to pH of 3.5 by adding a sodium hydroxide solution. The dissolved metal solution (aqua regia leachate after the pH adjustment) contained Au ions, Cu ions, Fe ions, and Ni ions, and their respective contents (mg/1L) are shown in Table 1.

Next, dried baker's yeast (manufactured by Oriental Yeast Co., Ltd, trade name: Dry Yeast 500G) was added to the solution so that the cell concentration was 5.0 x 10¹⁴ cells/m³ (18g/L dried baker's yeast) to prepare a test solution, and the test solution was agitated by shaking at a temperature of 34°C.

Next, after 1 hour, the treated solution containing the yeast was centrifuged to recover the yeast, and the yeast was washed with water. The yeast was then treated with aqua regia to elute the metals from the yeast cells, and the content of each metal ion in the liquid phase (mg/L) was measured by ICP (Inductively Coupled Plasma) emission spectroscopy. Based on the measurement results, the amounts of metals adsorbed by the yeast (mg/18g dry baker's yeast) were determined, and the recovery efficiencies were obtained. The results obtained are shown in Table 1.

### (Example 12)

An adsorption treatment of each metal ion onto the yeast, recovery of the yeast, and acid treatment were performed in the same manner as in Example 11, except that sodium citrate was added to the aqua regia leachate so that the concentration of sodium citrate was 0.5M in the solution after the pH adjustment, and the content of each metal ion in the treated solution and the baker's yeast was measured. The results are shown in Table 1. It can be seen that, by adding sodium citrate, although the Au recovery efficiency was 57%, similar to the Au recovery efficiency of 58% in Example 11 without the addition of sodium citrate, the recovery efficiencies of Cu and Fe became low, and the selectivity for Au recovery increases.

### [Table 1]

**(Table 1)**

| | Au content (mg/L) | Cu content (mg/L) | Fe content (mg/L) | Ni content (mg/L) |
|---|---|---|---|---|
| Dissolved metal solution (aqua regia leachate, pH3.5) | 276 | 18000 | 166 | 210 |
| Example 11 (without adding citric acid) | 161 (58%) | 801 (4.5%) | 116 (70%) | 0 (0%) |
| Example 12 (adding citric acid) | 156 (57%) | 11 (0.1%) | 0 (0%) | 0 (0%) |

The metal content (mg/L) in each of the examples in the table indicates the amount of each metal adsorbed by 18g of dry yeast.

The numerical value (%) in parentheses in each of the examples in the table indicates the recovery efficiency of each metal.

### (Example 13)

Nd ion recovery process with the yeast was performed in the same way as in Example 1, except that the NdCl₃ aqueous solution prepared as follows was used instead of the DyCl₃ aqueous solution as the dissolved metal solution.

The NdCl₃ aqueous solution was prepared by first dissolving NdCl₃ in pure water, and then adding hydrochloric acid to adjust to pH 5 to obtain a 1.0 mol/m³ NdCl₃ solution.

Using the NdCl₃ aqueous solution, in the same manner as in Example 1, Nd ion recovery process with the yeast was performed, and the concentration of Nd ions in filtrates of test solution portions periodically withdrawn was measured.

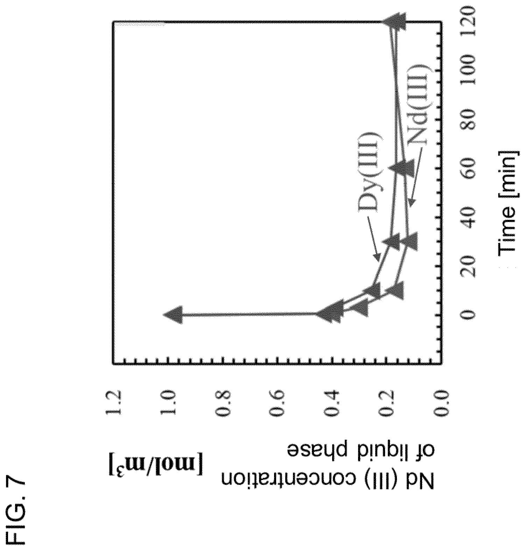

The results obtained are shown in FIG. 7. The measurement results of Dy ion concentration in Example 1 are also shown in FIG. 7. It can be seen that Nd ions are also adsorbed by the baker's yeast in the same way as Dy ions.

### (Example 14)

Nd ion recovery process with the yeast was performed in the same way as in Example 4, except that a NdCl₃ aqueous solution prepared as follows was used instead of the DyCl₃ aqueous solution as the dissolved metal solution.

NdCl₃ aqueous solution was prepared by first dissolving NdCl₃ in pure water, and then adding hydrochloric acid to adjust the pH to obtain 1.0 mol/m³ of NdCl₃ solutions with pH2.5, pH2.7, pH3.0, pH4.0 and pH5.0.

Using the obtained NdCl₃ aqueous solutions, in the same manner as in Example 4, Nd ion recovery process with the yeast was performed. The Nd recovery efficiencies based on the measured Nd ion concentrations in the filtrate are shown in Table 2. The measurement results of Dy recovery efficiencies in Examples 4-8 are also shown in Table 2. It can be seen that, as in the case of Dy ions, the recovery efficiency (adsorption efficiency) of Nd ions is about 10% at pH 2.5, but it improves with increasing pH, and a high recovery efficiency of over 80% is obtained at pH 4 to 5. Also, it can be seen that the recovery efficiency (adsorption efficiency) of Nd ions is relatively high at pH3.

### [Table 2]

**(Table 2)**

| pH of dissolved metal solution | pH 2.5 | pH 2.7 | pH 3.0 | pH 4.0 | pH 5.0 |
|---|---|---|---|---|---|
| Nd recovery efficiency (%) | 10 | 56 | 86 | 88 | 80 |
| Dy recovery efficiency (%) | 8 | 24 | 66 | 84 | 82 |

### (Example 15)

First, as the metal dissolving solution, hydrochloric acid leachate of waste electrical and electronic equipment (E-waste) was prepared, and adjusted to pH1.0 by adding a sodium hydroxide solution. The dissolved metal solution (hydrochloric acid leachate solution after the pH adjustment) contained Au ions, Cu ions, Fe ions, and Ni ions, and their concentrations were 44.8ppm (mg/L), 156ppm, 771ppm, and 544ppm, respectively.

Next, the dissolved metal solution was placed in a 1 L mixing vessel, and then the dried baker's yeast (manufactured by Oriental Yeast Co., Ltd, trade name: Dry Yeast 500G) was added to the solution so that the cell concentration was 3.3 x 10¹⁴ cells/m³ (12g/L dried baker's yeast), and the mixed liquid of the baker's yeast and the dissolved metal solution was stirred for 30 minutes until the adsorption equilibrium was reached.

Next, the dissolved metal solution and the dried baker's yeast were continuously stably fed to the mixed liquid in the mixing vessel at 16.7mL/min (1L/h) and 0.2g/min, respectively, while the mixed liquid was continuously stably discharged from the mixing vessel at 16.7mL/min (1L/h), and the average residence time of the mixed liquid was adjusted to be 1 hour, and thereby a continuous adsorption process was performed.

In the above continuous adsorption process, the following operations were performed to confirm the continuous recovery of Au ions. Portions of the mixed liquid were periodically withdrawn from the mixing vessel, and filtered through a filtration filter with a pore size of 0.2µm, and the metal ion concentrations in the resulting filtrates were analyzed by ICP (Inductively Coupled Plasma) emission spectrometry. Based on the analytical results, the Au recovery efficiency (the ratio (%) of the amount of Au ions adsorbed by the yeast to the amount of Au ions in the dissolved metal solution before the addition of the yeast) was determined. The recovery efficiencies of the other metal ions (the recovery efficiencies of Cu, Fe and Ni) were similarly determined.

The recovery efficiencies (adsorption efficiencies) were determined according to the following formula. Recovery efficiency (%) = (the metal ion concentration in the dissolved metal solution before the addition of the yeast - the metal ion concentration in the filtrate) / the metal ion concentration in the dissolved metal solution before the addition of yeast x 100

The concentration of each metal ion (Au concentration, Cu concentration, Fe concentration, and Ni concentration) and the recovery efficiency (adsorption efficiency) in each filtrate after a predetermined time from the start of continuous stable feeding are shown in Table 3.

The "time" in the table indicates a time (min) from the start of continuous stable feeding. The metal concentration values in the left end side column of the table indicate the concentration (mg/L) of each metal ion in the dissolved metal solution before the addition of the yeast.

As shown in Table 3, the Au recovery efficiency (adsorption efficiency) was almost constant after any one of the times, and about 96% recovery efficiency of Au was achieved under steady-state operation when the mean residence time of the mixed liquid was 1 hour. The Au recovery rate in this case is 0.043 kg-Au/h/m³.

Regarding Cu ions, Fe ions, and Ni ions, the decrease in metal ion concentration is small in all cases, and the adsorption process in this example was found to have a high selectivity of Au ions with respect to these heavy metal ions.

### [Table 3]

**(Table 3)**

| Time (min) | - | 10 | 20 | 30 | 60 | 90 | 120 | 150 | 180 |
|---|---|---|---|---|---|---|---|---|---|
| Au concentration (mg/L) | 44.8 | 1.81 | 1.91 | 1.83 | 1.84 | 1.79 | 1.66 | 1.85 | 1.73 |
| Au recovery efficiency (%) | - | 96.0 | 95.7 | 95.9 | 95.9 | 96.0 | 96.3 | 95.9 | 96.1 |
| Cu concentration (mg/L) | 156 | 154 | 150 | 149 | 150 | 149 | 146 | 150 | 150 |
| Cu recovery efficiency (%) | - | 1.3 | 3.8 | 4.5 | 3.8 | 4.5 | 6.4 | 3.8 | 3.8 |
| Fe concentration (mg/L) | 771 | 654 | 692 | 624 | 694 | 675 | 655 | 681 | 677 |
| Fe recovery efficiency (%) | - | 15.2 | 10.2 | 19.1 | 10.0 | 12.5 | 15.0 | 11.7 | 12.2 |
| Ni concentration (mg/L) | 544 | 543 | 528 | 528 | 528 | 524 | 512 | 531 | 529 |
| Ni recovery efficiency | - | 0.2 | 2.9 | 2.9 | 2.9 | 3.7 | 5.9 | 2.4 | 2.8 |
| (%) | | | | | | | | | |

### [Reference Signs List]

11 Mixing vessel
12 Agitator
13 Dissolved metal solution inlet
13b Dissolved metal solution feed control valve
14 Yeast feed port
15 pH adjuster inlet
15b pH adjuster feed control valve
16 Mixed liquid taking out part
16p Mixed liquid feed pump
17 Ion sequestering agent inlet
17b Ion sequestering agent feed control valve
21 Storage section
22 Air pump
23 Feeder
31 Solid-liquid separator
32 Remaining liquid recycle line
32b Remaining liquid control valve
41 Dryer
51 Heat treatment furnace
61 Dust collector
62 Collected powder conveyance line (belt conveyor)
63 Blower
64 Flare Stack
FIC: Flow indicator and controller
MCC: Motor control center
M: Motor

## Claims

1. A metal recovery method comprising:
mixing a liquid containing a metal ion with a yeast to adsorb the metal ion by the yeast in the resulting mixed liquid;
separating the yeast from the mixed liquid obtained in the adsorption process; and
recovering the metal ion from the yeast separated in the separation process,
wherein the metal ion to be adsorbed by the yeast in the adsorption process is a rare earth ion and/or a precious metal ion.

2. The metal recovery method according to claim 1, wherein the metal ion is a rare earth ion, and
a pH of the mixed liquid in the adsorption process is 2.5 or higher and lower than 7.

3. The metal recovery method according to claim 1, wherein the metal ion is a precious metal ion, and
a pH of the mixed liquid in the adsorption process is lower than 4.

4. The metal recovery method according to claim 1 or 2, wherein the metal ion includes a Nd ion or a Dy ion.

5. The metal recovery method according to claim 1 or 3, wherein the metal ion includes a gold ion.

6. The metal recovery method according to any one of claims 1 to 5, wherein the liquid before mixing with the yeast further contains an ion of a metal other than rare earths or precious metals.

7. The metal recovery method according to claim 6, wherein the metal other than rare earths or precious metals includes at least one selected from the group consisting of iron, copper, nickel, aluminum, manganese, magnesium, and zinc.

8. The metal recovery method according to claim 6 or 7, wherein the metal ion is a precious metal ion, and the adsorption process comprises adding a metal ion sequestering agent capable of binding to metal ions other than precious metals to the liquid before mixing with the yeast or the mixed liquid.

9. The metal recovery method according to claim 8, wherein the metal ion sequestering agent is citric acid or a salt thereof.

10. The metal recovery method according to any one of claims 1 to 9, wherein the yeast is a baker's yeast.

11. The metal recovery method according to any one of claims 1 to 10, wherein in the adsorption process, the liquid and the yeast are continuously fed into a mixing vessel, and the mixed liquid containing the liquid and the yeast is continuously discharged from the mixing vessel.

12. The metal recovery method according to any one of claims 1 to 11, wherein in the separation process, the mixed liquid obtained in the adsorption process is subjected to a solid-liquid separation to obtain a separated solid fraction, and
in the recovery process, the separated solid fraction obtained in the separation process is subjected to an acid-treatment to recover the metal ion adsorbed by the yeast.

13. The metal recovery method according to any one of claims 1 to 11, wherein in the separation process, the mixed liquid obtained in the adsorption process is subjected to a solid-liquid separation to obtain a separated solid fraction, and
in the recovery process, the separated solid fraction obtained in the separation process is subjected to a heat treatment to burn the yeast, and thereby the metal ion adsorbed by the yeast is recovered as a concentrate thereof.

14. The metal recovery method according to claim 13, wherein in the recovery process, the heat treatment of the separated solid fraction is performed by burning in an industrial furnace.

15. The metal recovery method according to claim 13 or 14, comprising recovering powder from an exhaust gas of the heat treatment, and mixing the recovered powder with the separated solid fraction before the heat treatment.

16. The metal recovery method according to any one of claims 12 to 15, wherein the solid-liquid separation is performed by at least one selected from the group consisting of centrifugation, filtration, membrane separation, and sedimentation separation.

17. The metal recovery method according to any one of claims 12 to 16, further comprising drying the separated solid fraction to lower the water content thereof.

18. The metal recovery method according to any one of claims 12 to 17, wherein a separated liquid obtained by the solid-liquid separation in the separation process is mixed with the liquid containing the metal ion before mixing with the yeast.
